# EUROPÄISCHE PATENTSCHRIFT

(11) **EP 2 623 375 B1**
(45) Veröffentlichungstag und Bekanntmachung des Hinweises auf die Patenterteilung: **16.12.2015**
(21) Anmeldenummer: 13002333.6
(22) Anmeldetag: 01.03.2011
(51) Int. Cl.: B60R 9/06

(54) **Heckträger**
Rear carrier
Support de toit

(30) Priorität: 23.03.2010 DE 102010012333
(43) Veröffentlichungstag der Anmeldung: 07.08.2013
(62) Teilanmeldung aus: 11001679.7
(73) Patentinhaber: WESTFALIA - Automotive GmbH, 33378 Rheda-Wiedenbrück (DE)
(72) Erfinder: Schmitt, Michael, D-33829 Borgholzhausen (DE)
(74) Vertreter: Patentanwälte Bregenzer und Reule Partnerschaftsgesellschaft mbB

(56) Entgegenhaltungen:
- US-A- 5 215 234
- US-A- 5 368 209
- US-A1- 2006 261 111

## Beschreibung

Die Erfindung betrifft einen Heckträger, der an einem Heck eines Kraftfahrzeugs angeordnet oder anordenbar ist und eine Tragstruktur zum Tragen einer Transporteinrichtung aufweist, wobei eine Befestigungseinrichtung zum Befestigen der Transporteinrichtung an der Tragstruktur vorgesehen ist gemäß dem Oberbegriff des Anspruchs 1.

Ein solcher Heckträger ist beispielsweise in US 5,215,234 beschrieben.

Ein weiterer Heckträger ist beispielsweise in DE 10 2009 025 507 beschrieben. Der Heckträger ist beispielsweise an einer Anhängekupplung des Kraftfahrzeuges befestigbar, so dass er nach hinten vor das Heck des Kraftfahrzeuges vorsteht. Die Tragstruktur des Heckträgers bildet sozusagen eine Plattform, auf die die Transporteinrichtung aufgesetzt werden kann. Bei der Transporteinrichtung handelt es sich beispielsweise um einen Behälter oder eine Box, die die zu transportierenden Güter schützt.

Die in DE 10 2009 025 507 vorgeschlagene Befestigungseinrichtung umfasst unter anderem einen Befestigungsriegel an der Transporteinrichtung, mit der die Transporteinrichtung an der Tragstruktur befestigbar ist.

Somit muss also die jeweilige Transporteinrichtung mit einer Befestigungseinrichtung ausgestattet sein, um sie am Heckträger befestigen zu können.

Es ist daher die Aufgabe der vorliegenden Erfindung, einen Heckträger bereitzustellen, der eine Befestigungseinrichtung aufweist, die zum sicheren und möglichst spielarmen Halten der Transporteinrichtung, insbesondere eines Transportbehälters, geeignet ist.

Zur Lösung der Aufgabe ist ein Heckträger gemäß der technischen Lehre des Anspruchs 1 vorgesehen.

Ein Grundgedanke der Erfindung ist es, dass die heckträgerseitige Befestigungseinrichtung die Transporteinrichtung formschlüssig hält. Somit kann die Befestigungseinrichtung universell für verschiedene Arten von Transporteinrichtungen verwendet werden, beispielsweise Transportbehälter oder Transportboxen. Weiterhin kann die Transporteinrichtung auch eine oder mehrere Halterungen für ein Sportgerät aufweisen, beispielsweise ein Fahrrad. Eine bevorzugte Ausführungsform der Erfindung sieht vor, dass die Transporteinrichtung beispielsweise eine Art Gestell umfasst, an dem eine Halterung oder mehrere Halterungen für Sportgeräte und/oder Fahrräder vorhanden sind.

Der mindestens eine Halter und der mindestens eine Gegenhalter sind zweckmäßigerweise an einander gegenüberliegenden Seiten der Tragstruktur angeordnet. Korrespondierend dazu hat die Transporteinrichtung passende Halterkonturen und Gegenhalterkonturen. Eine sehr zweckmäßige Ausführungsform sieht vor, dass Halter und Gegenhalter sich jeweils paarweise gegenüberliegend angeordnet sind. Beispielsweise kann man so an vier voneinander beabstandeten Punkten eine formschlüssige Befestigung der Transporteinrichtung am Heckträger bewirken. Es versteht sich, dass auch eine Art Dreipunktverriegelung oder ein Dreipunkt-Formschluss vorhanden sein kann. Beispielsweise können zwei Gegenhalter und ein Halter an Eckbereichen eines Dreieckes angeordnet sein.

Besonders bevorzugt ist es, wenn die Befestigungseinrichtung ein Schloss zum Festlegen in der Haltestellung und/oder der Freigabestellung umfasst. Dadurch ist zugleich eine Diebstahlsicherung bewirkt.

Weiterhin ist es vorteilhaft, wenn der Halter oder die Halter durch eine Rastanordnung in der Haltestellung verrastbar sind. Beispielsweise könnte eine federbelastete Kugel, ein federbelasteter oder federnder Riegel Bestandteil der Rastanordnung bilden. Somit ist es möglich, dass die Befestigungseinrichtung die Transporteinrichtung sozusagen in der Haltestellung verrastet.

Die Tragstruktur weist zweckmäßigerweise mindestens eine Auflagefläche zum Auflegen der Transporteinrichtung auf. Der Halter und der mindestens eine Gegenhalter sind mit der Transporteinrichtung im Eingriff, das heißt, sie greifen in die Halterkontur und die Gegenhalterkontur ein, wenn die Transporteinrichtung auf der mindestens einen Auflagefläche zumindest abschnittsweise flächig aufliegt. Der mindestens eine Halter und der mindestens eine Gegenhalter bilden zusammen also mit der Auflagefläche eine Art Aufnahme, in die die Transporteinrichtung einsetzbar ist. Die Transporteinrichtung ist zumindest im Querschnitt zum Beispiel im Wesentlichen U-förmig. Die Transporteinrichtung weist beispielsweise eine Bodenwand auf, die auf der Auflagefläche zumindest abschnittsweise flächig aufliegt. Es versteht sich, dass auch ein Gestell, das eine U-förmige Gestalt aufweist, in der vorgenannten Aufnahme zum einen durch die Auflagefläche und zum andern durch die insbesondere einander gegenüberliegenden Halter und Gegenhalter gebildet ist. Somit ist ein formschlüssiger Halt sowohl bodenseitig als auch seitlich realisierbar. Insgesamt ist eine Verbindung über eine breite Auflage- und Abstützbasis geschaffen. Die Kraftübertragung von der Transporteinrichtung auf den Heckträger beziehungsweise umgekehrt ist sowohl bodenseitig als auch seitlich formschlüssig. Weiterhin sind die Formschlusskonturen des Halters und Gegenhalters an der Innenseite der Aufnahme angeordnet, das heißt, sie stehen nicht nach außen vor.

Eine Schwenkachse des mindestens einen Schwenklagers liegt zweckmäßigerweise in einer Auflageebene oder parallel dazu, in der die Transporteinrichtung auf der Tragstruktur aufliegt. Es versteht sich, dass auch eine schräge beziehungsweise spitzwinklige Lage der Schwenkachse bezüglich der Auflageebene möglich ist. Bei Gebrauch des Lastenträgers verläuft die Schwenkachse beispielsweise im Wesentlichen horizontal oder spitzwinklig schräg zur Horizontalen. Somit schwenkt also beispielsweise der mindestens eine Halter sozusagen in den Formschluss hinein und kann eine Kraft in Richtung der Auflageebene auf die Transporteinrichtung ausüben, so dass diese gegen die Auflageebene gedrückt wird, was einen formschlüssigen Halt darstellt.

Die Formschlusskonturen des Halters, des Gegenhalters, der Halterkontur oder auch der Gegenhalterkontur sind beispielsweise im Wesentlichen kreisförmig oder bogenförmig. Dies ermöglicht es, dass die jeweiligen Konturen eine Schwenkbewegung zulassen. An dieser Stelle sei bemerkt, dass zum einen die Konturen gegeneinander schwenkbar ausgestaltet sein können, zum andern aber auch der Halter und/oder der Gegenhalter über ein Schwenklager schwenkbar gelagert sein können. Somit ist es beispielsweise möglich, dass die Transporteinrichtung in den Formschluss der Befestigungseinrichtung einschwenkt beziehungsweise aus diesem ausgeschwenkt wird.

Eine bevorzugte Konfiguration sieht beispielsweise vor, dass der mindestens eine Halter und die Transporteinrichtung beim Verstellen aus der Haltestellung in die Freigabestellung gegensinnig schwenken. Beispielsweise kann der Halter sozusagen aus der Transporteinrichtung ausschwenken, so dass diese aus dem Formschluss freikommt und vom Heckträger entfernt werden kann. Eine bevorzugte Variante kann dabei vorsehen, dass der mindestens eine Halter in der Art eines Hebels wirkt, derart, dass er beim Verstellen in die Freigabestellung die Transporteinrichtung von der Tragstruktur weg bewegt, beispielsweise von dieser wegschwenkt. Somit hebelt der Halter oder hebeln die Halter beispielsweise die Transporteinrichtung quasi von dem Heckträger weg, so dass das Entfernen und Lösen besonders leicht fällt. Wenn also die Transporteinrichtung beispielsweise auf der Auflagefläche etwas anhaftet, insbesondere nach längerem Gebrauch, ermöglicht das Aushebeln oder Weghebeln eine besonders einfache Entfernung vom Heckträger.

Die Formschlusskonturen des mindestens einen Halters und/oder des Gegenhalters und/oder der Halterkontur und/oder der Gegenhalterkontur weisen beispielsweise einen Formschlussvorsprung oder eine Formschlussaufnahme auf. Es versteht sich, dass zweckmäßigerweise immer zueinander passende oder komplementäre Paarungen getroffen sind, so dass beispielsweise die Formschlusskonturen des Halters und des Gegenhalters jeweils als Formschlussvorsprung ausgestaltet sind, während die Halterkontur und Gegenhalterkontur als Formschlussaufnahmen ausgeformt sind. An dieser Stelle sei aber bemerkt, dass auch die umgekehrte Konfiguration getroffen sein kann, dass nämlich der Halter und/oder der Gegenhalter als Formschlussaufnahme ausgestaltet sind. Der Formschlussvorsprung ist beispielsweise in der Art einer Haltenase ausgestaltet. An der Frontseite beziehungsweise Stirnseite des Formschlussvorsprunges befindet sich zweckmäßigerweise eine kreisförmige oder bogenförmige Gleitkontur.

Die Transporteinrichtung ist zweckmäßigerweise in der Haltestellung zwischen den mindestens einen Halter und den mindestens einen Gegenhalter geklemmt. Somit ist also mit der Befestigungseinrichtung eine Art Klemmstellung erzielbar. Dies kann man beispielsweise dadurch erzielen, dass eines oder mehrere der Schwenklager und/oder eine der Konturen eine Exzentrizität zum Klemmen der Transporteinrichtung in der Haltestellung aufweist.

Es ist weiterhin möglich, dass beispielsweise der Halter und/oder der Gegenhalter in die Haltestellung oder die Klemmstellung federbelastet ist.

Der Halter ist zweckmäßigerweise an einem Lagerrohrkörper angeordnet, der seinerseits wiederum schwenkbar an einem Lagerbolzenkörper gelagert ist. Der Halter steht beispielsweise vor den Lagerrohrkörper vor. Der Lagerbolzenkörper greift in den Lagerrohrkörper ein.

Weiterhin ist es vorteilhaft, wenn die Befestigungseinrichtung einen oder mehrere Riegel zum Verriegeln des mindestens einen Halters in der Haltestellung aufweist. Beispielsweise greift der Riegel in der Verriegelungsstellung in den vorgenannten Lagerbolzenkörper ein. Es versteht sich, dass der Riegel aber auch beispielsweise direkt in die Tragstruktur oder eine sonstige Komponente des Heckträgers eingreifen kann, um die Befestigungseinrichtung in der Haltestellung zu verriegeln. Selbstverständlich ist es auch denkbar, dass der Riegel in der Freigabestellung wirkt, so dass die Befestigungseinrichtung sozusagen frei und offen zum Einsetzen oder Aufsetzen der Transporteinrichtung in oder an der Tragstruktur ausgestaltet ist. Des Weiteren ist es möglich, den Riegel oder die Riegel mit einem Schloss auszustatten, so dass die Befestigungseinrichtung in der Verriegelungsstellung verschließbar ist. Das Schloss kann auch als ein Indikator für eine ordnungsgemäße Verriegelung dienen.

Der Riegel ist zweckmäßigerweise durch eine Federanordnung, beispielsweise eine Schraubenfeder oder mehrere Schraubenfedern, in seine den Halter verriegelnde Verriegelungsstellung federbelastet. Somit muss der Riegel also gegen die Kraft der Feder entriegelt werden, um die Befestigungseinrichtung zwischen der Freigabestellung und der Haltestellung und/oder umgekehrt zu betätigen.

Der Riegel ist beispielsweise an einem Träger angeordnet, der als Betätigungshebel zum Verstellen des Halters ausgestaltet ist. Der Träger kann auch ein zum Befestigen einer Last an dem Lastenträger vorgesehener Träger sein. Bevorzugt ist der Träger rohrförmig. Eine besonders bevorzugte Ausgestaltung sieht vor, dass der Träger U-förmig oder bügelartig ist.

Es versteht sich, dass an dem Träger nicht nur der Riegel, sondern besonders bevorzugt auch der mindestens eine Halter angeordnet ist. Weiterhin ist es denkbar, einen Träger vorzusehen, an dem nur einer oder mehrere Halter vorgesehen sind, jedoch kein Riegel. Auch bei diesen Trägern ist es vorteilhaft, wenn sie eine Zusatzfunktion haben, beispielsweise als Betätigungshebel zum Verstellen des Halters ausgestaltet und/oder zum Befestigen einer Last an dem Lastenträger vorgesehen sind.

Der Träger, insbesondere das Halterohr, ist beispielsweise an dem vorgenannten Lagerrohrkörper angeordnet, der an einem Lagerbolzenkörper schwenkbar ist. Bei dieser Konfiguration kann der mindestens eine Halter an dem Träger und/oder dem Lagerrohrkörper angeordnet sein.

Der Lastenträger ist beispielsweise als eine Schublade ausgestaltet, die aus einem Heck des Kraftfahrzeuges ausziehbar ist. Weiterhin kann der Lastenträger auch teleskopierbar sein, das heißt, in der Art eines Teleskops aus dem Heck des Kraftfahrzeuges ausziehbar sein. Ferner ist es möglich, dass der Lastenträger ein vom Kraftfahrzeug entfernbarer beziehungsweise lösbarer Lastenträger ist. Bei dieser Ausgestaltung weist der Lastenträger eine Halterung auf, mit der er an dem Heck des Kraftfahrzeuges befestigbar ist, insbesondere an einer Anhängekupplung des Kraftfahrzeuges.

Nachfolgend werden Ausführungsbeispiele der Erfindung anhand der Zeichnung erläutert. Es zeigen:
- Figur 1: eine schematische Seitenansicht eines ersten Ausführungsbeispiels eines erfindungsgemäßen Heckträgers sowie einer Transporteinrichtung,
- Figur 2a: eine Befestigungseinrichtung des Heckträgers gemäß Figur 1 in einer Haltestellung im Eingriff mit der Transporteinrichtung, etwa entsprechend einem Ausschnitt A in Figur 1,
- Figur 2b: die Anordnung gemäß Figur 2a, allerdings in Freigabestellung der Befestigungseinrichtung,
- Figur 3: ein zweites Ausführungsbeispiel eines erfindungsgemäßen Heckträgers mit einer Befestigungseinrichtung, die eine Betätigungseinrichtung im Bereich eines Kennzeichenträgers aufweist,
- Figur 4a: ein drittes Ausführungsbeispiel eines erfindungsgemäßen Heckträgers mit einer fußbetätigbaren Befestigungseinrichtung in Haltestellung und
- Figur 4b: die Anordnung gemäß Figur 4a, allerdings mit bereits gelöster Befestigungseinrichtung und teilweise von dem Heckträger weggeschwenkter Transporteinrichtung.

Bei den nachfolgenden Ausführungsbeispielen sind gleiche oder gleichartige Komponenten mit denselben Bezugszeichen versehen. Zur Verdeutlichung von Unterschieden sind bei den drei Ausführungsbeispielen die Kleinbuchstaben a, b und c verwendet.

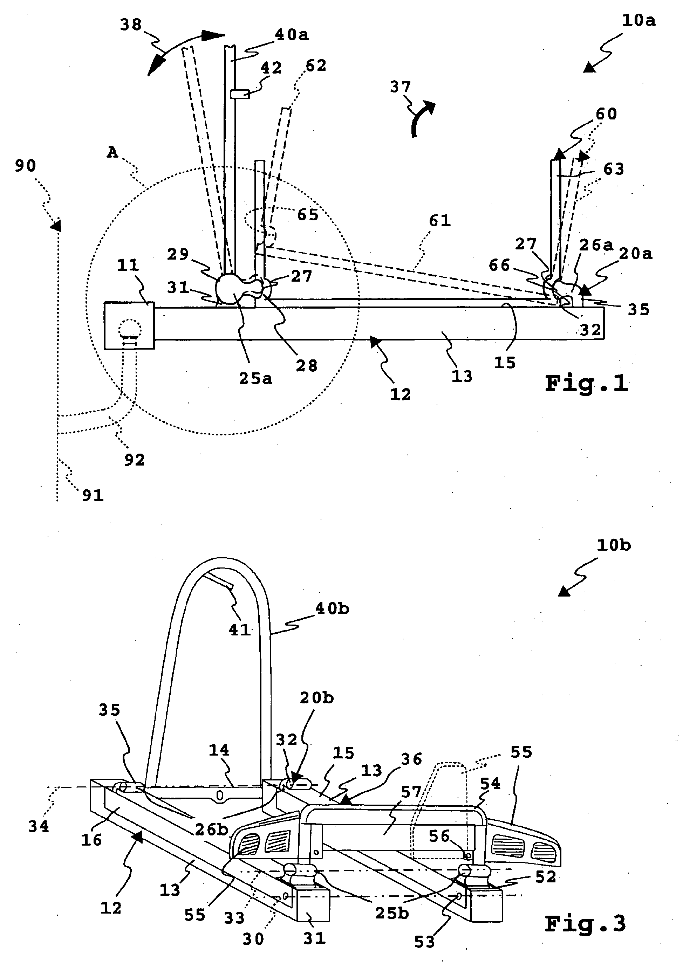

Die Heckträger 10a, 10b und 10c gemäß Figuren 1, 3 und 4 sind an einem Heck 91 eines Kraftfahrzeuges 90 befestigbar. Beispielsweise sind die Heckträger 10a-10c aus dem Heck 91 des Kraftfahrzeuges 90 in der Art einer Schublade ausziehbar. Dies ist beispielsweise beim Heckträger 10b der Fall. An den Heckträgern 10a, 10c sind beispielsweise Kupplungshalter 11 vorgesehen (schematisch dargestellt), mit denen die Heckträger 10a, 10c an einer Anhängekupplung 92 des Kraftfahrzeuges 90 befestigbar sind.

Die Heckträger 10a-10c haben jeweils eine Tragstruktur 12 zum Tragen einer Transporteinrichtung 60, beispielsweise eines Transportbehälters, einer Transportbox oder eines Tragegestells, an dem weitere Halterungen (nicht dargestellt) angeordnet sein können, beispielsweise Halter für Fahrräder, insbesondere schwenkbare Rinnen, Befestigungsriemen, Klemmschrauben und dergleichen mehr. Die Transporteinrichtung 60 ist lediglich schematisch dargestellt und hat eine im Querschnitt U-förmige Gestalt. Von einem Boden 61 stehen beispielsweise Seitenwände 62, 63 nach oben ab. Anstelle der Seitenwände 62, 63 könnten auch Tragstäbe oder sonstige Seitenkörper vorgesehen sein, die vom Boden 61 oder einem sonstigen Bodenkörper abstehen. An dieser Stelle sei also bemerkt, dass die Transporteinrichtung 60 auch als ein Gestell ausgestaltet sein kann. Weitere, die Seitenwände 62, 63 verbindende Seitenwände und/oder ein Deckel sind bei der lediglich schematischen und beispielhaften Darstellung der Transporteinrichtung 60 in der Zeichnung weggelassen.

Auch die Tragstruktur 12 ist sehr vereinfacht dargestellt. Beispielsweise weist sie zwei Längsträger 13 auf, die durch einen oder mehrere Querträger 14 miteinander verbunden sind. In Figur 3 ist beispielhaft ein in der Nähe des Hecks 91 angeordneter Querträger 14 eingezeichnet. Insgesamt bildet also die Tragstruktur 12 eine U-förmige oder gabelförmige Gestellstruktur, die zum Auflegen einer Last, hier also der Transporteinrichtung 60, geeignet ist.

Auf den Längsträgern 13 oder, wie bei dem Heckträger 10b, auf einem an den Längsträgern 13, insbesondere in Richtung vom Heck 91 weg, bewegbar, zweckmäßigerweise schwenkbar, gelagerten Ladegestell 16, sind beispielsweise Auflageflächen 15 vorhanden, auf die der Boden 61 der Transporteinrichtung 60 auflegbar ist. Die Auflageflächen 15 sind Planflächen, genauso wie die Unterseite des Bodens 61, so dass die Transporteinrichtung 60, wenn sie auf den Heckträger 10a-10c aufgelegt ist, flächig auf den Auflageflächen 15 aufliegt. Bereits dadurch ist gewährleistet, dass die Transporteinrichtung 60, beispielsweise ein Fahrradträger oder eine Transportkiste, sozusagen satt auf dem Heckträger 10a-10c auflastet.

Die Transporteinrichtung 60 kann durch Befestigungseinrichtungen 20a-20c zudem bequem und sicher am jeweiligen Heckträger 10a-10c befestigt werden. Die Befestigungseinrichtungen 20a-20c halten die Transporteinrichtung 60 jeweils formschlüssig am Heckträger 10a-10c. Weiterhin sind die Befestigungseinrichtungen 20a-20c bequem bedienbar, was nachfolgend deutlich wird:
An einander entgegengesetzten Seiten der Transporteinrichtung 60 sind Halterkonturen 65 und Gegenhalterkonturen 66 angeordnet. Beispielsweise befinden sich die Halterkonturen 65 und die Gegenhalterkonturen 66 an den Seitenwänden 62, 63 in der Nähe des Bodens 61. Bevorzugt ist es, wenn jeweils zwei Halterkonturen 65 und zwei Gegenhalterkonturen 66 vorgesehen sind.

Die Halterkonturen 65 und Gegenhalterkonturen 66 sind z.B. als Formschlussaufnahmen 67 (Formschlussvorsprünge sind auch denkbar) ausgestaltet, in die Halter 25a-25c sowie Gegenhalter 26a-26c der Befestigungseinrichtungen 20a-20c mit Formschlusskonturen 27 formschlüssig eingreifen können. Die Formschlusskonturen 27 sind als Formschlussvorsprünge 28 ausgestaltet, wobei auch Formschlussaufnahmen denkbar sind.

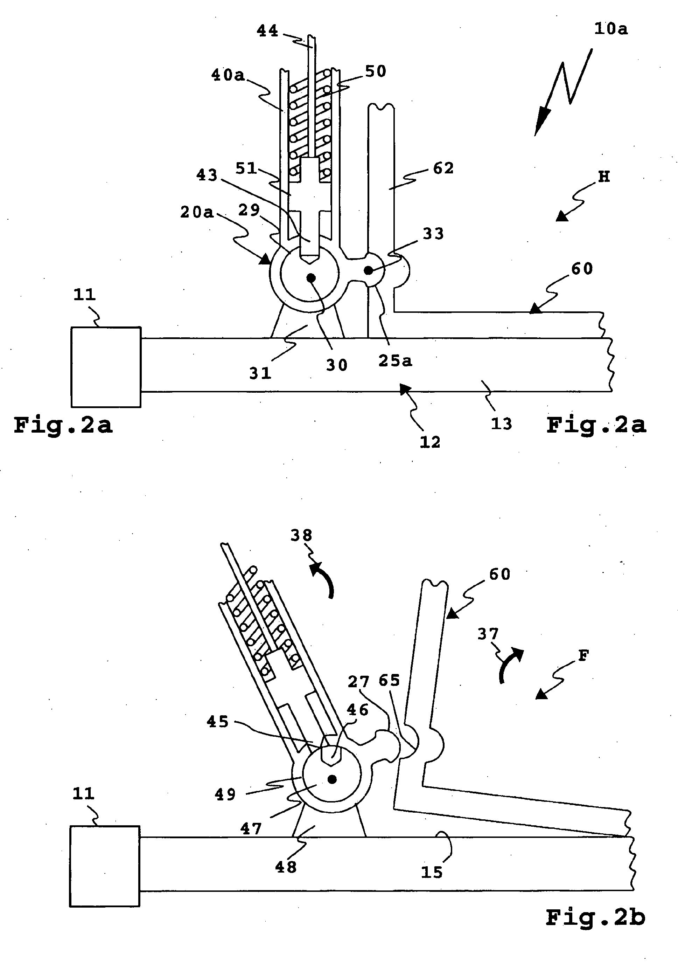

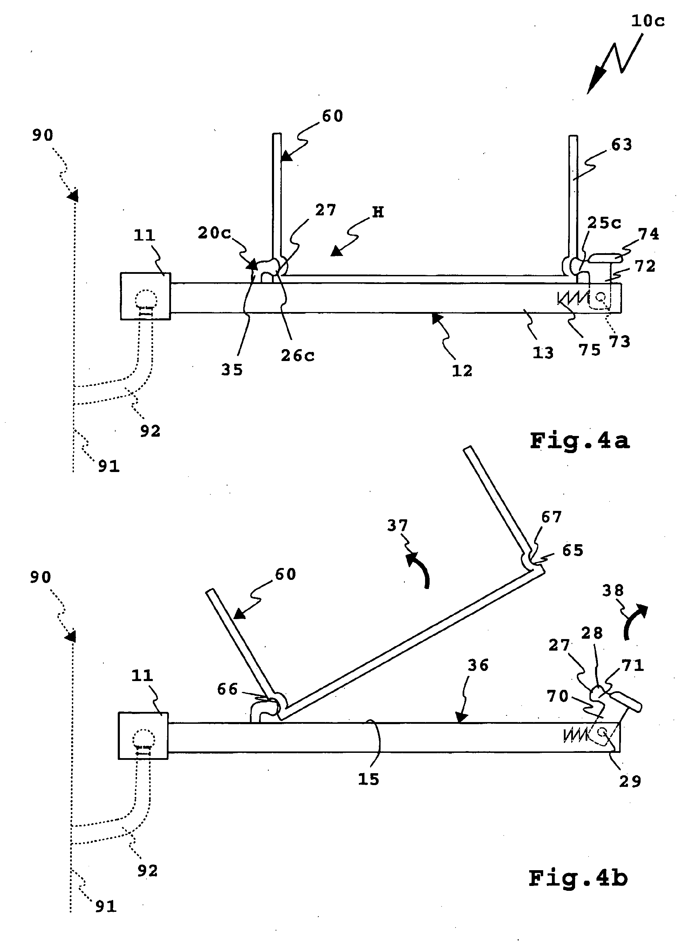

Die Gegenhalter 26a-26c sind bezüglich der Tragstruktur 12 feststehend, während die Halter 25a-25c jeweils schwenkbeweglich bezüglich der Tragstruktur 12 sind. Die Halter 25a-25c können somit aus einer Haltestellung H, in der die jeweilige Befestigungseinrichtung 20a-20c die Transporteinrichtung 60 formschlüssig hält, in eine Freigabestellung F verstellt werden, die zum Entnehmen beziehungsweise Entfernen der Transporteinrichtung 60 vom Heckträger 10a-10c vorgesehen ist. In Figur 1 ist beispielsweise die Freigabestellung F in gestrichelten Linien eingezeichnet. Weiterhin sieht man die Freigabestellung F in den Figuren 2b, 4b.

Die Ausbildung der Halter 25a-25c sowie der Gegenhalter 26a-26c ermöglicht ein einfaches Befestigen und Lösen der Transporteinrichtung 60 an einem der Heckträger 10a-10c. Die Halter 25a-25c sind dabei jeweils als Schwenklager 29 ausgestaltet, das heißt, die Formschlussvorsprünge 28 schwenken um eine Schwenkachse 30 bezüglich einer Lagerbasis 31a-31c.

Weiterhin bilden auch die Formschlusskonturen 27 sowie die zu diesen passenden Halterkonturen 65 und Gegenhalterkonturen 66 Schwenklager 32, die ein Schwenken der Halter 25a-25c bezüglich der Transporteinrichtung 60 um eine Schwenkachse 33 sowie der Transporteinrichtung 60 bezüglich der Gegenhalter 26a-26c um eine Schwenkachse 34 ermöglicht.

Die Gegenhalter 26a-26c sind beispielsweise durch Winkelelemente 35 gebildet, die an den jeweiligen Längsendbereichen der Längsträger 13 angeordnet sind. Bei dem Heckträger 10a sind die Gegenhalter 26a am vom Heck 91 des Kraftfahrzeugs 90 entfernten Längsende der Längsträger 13 angeordnet, bei den Heckträgern 10b, 10c am näher beim Heck 91 befindlichen Längsende des jeweiligen Längsträgers 13. Die freien Enden der Winkelelemente 35 stehen in Richtung einer durch die Halter 25a-25c und die Gegenhalter 26a-26c seitlich sowie bodenseitig durch die Auflagefläche 15 gebildeten Aufnahme 36 nach innen vor. Die Gegenhalter 26a-26c sind an der Tragstruktur 12 starr und unbeweglich befestigt. Sie können beispielsweise mit den Längsträgern 13 einstückig sein, an diesen angeschweißt oder angeklebt sein. Durch die runde, vorliegend sogar kreisrunde, Ausgestaltung der Formschlussaufnahmen 67 sowie dazu passend der Formschlusskonturen 27 an den Gegenhaltern 26a-26c sind dementsprechend die Schwenklager 32 gebildet. Die Transporteinrichtung 60 kann also um die durch die Gegenhalter 26a-26c definierte Schwenkachse 34 sozusagen aus der Aufnahme 36 ausschwenken (gestrichelt in Figur 1 sowie in den Figuren 2b, 4b), was durch einen Pfeil 37 verdeutlicht ist.

Dieses Ausschwenken aus der Aufnahme 36 ist allerdings nur dann möglich, wenn die jeweilige Befestigungseinrichtung 20a-20c in ihrer Freigabestellung F ist. Dabei wird das Ausschwenken (Pfeil 37) der Transporteinrichtung 60 aus der Aufnahme 36 durch den jeweiligen Halter 25a-25c sogar noch unterstützt, wenn diese aus der Haltestellung H in die Freigabestellung F bewegt werden. Dabei schwenken die Halter 25a-25c, was durch einen Pfeil 38 angedeutet ist. Die Pfeile 37, 38 sind gegensinnig und verdeutlichen somit ein gegensinniges Schwenken einerseits der Halter 25a-25c und andererseits der Transporteinrichtung 60, wenn die Befestigungseinrichtung 20a-20c gelöst beziehungsweise in ihre Freigabestellung F verstellt wird und die Transporteinrichtung 60 vom Heckträger 10a-10c entfernt wird. Die Halter 25a-25c hebeln sozusagen die Transporteinrichtung 60 bei ihrem Entfernen vom Heckträger 10a-10c aus der Aufnahme 36 heraus.

Die Heckträger 10a, 10b weisen Träger 40a, 40b auf, die zunächst einmal dazu dienen, eine Last auf dem Heckträger 10a, 10b zu befestigen. Die Träger 40a, 40b sind beispielsweise als U-förmige Bügel ausgestaltet, die nach oben vor die Auflagefläche 15 vorstehen. Beispielsweise sind die Träger 40a, 40b im Wesentlichen rechtwinklig zu den Längsträgern 13, wenn sie in ihrer Gebrauchsstellung sind. Bevorzugt ist es, wenn man die Träger 40a, 40b in Richtung der Längsträger 13 verstellen kann, wenn sie nicht gebraucht werden. Dazu ist beispielsweise ein Hebel 41 am Träger 40b vorhanden, der zur Entriegelung des Trägers 40b dient, so dass dieser in Richtung der Längsträger 13 verstellt werden kann, in der Zeichnung nach unten. Dann liegt der Träger 40b beispielsweise zwischen den beiden Längsträgern 13, so dass er nach oben hin nicht vorsteht und der Heckträger 10b in das Heck 91 des Kraftfahrzeugs 90 in der Art einer Schublade eingeschoben werden kann.

Auch der Träger 40a weist ein Betätigungsorgan auf, beispielsweise einen Hebel 42, mit dem die Befestigungseinrichtung 20a entriegelbar ist. Der Hebel 42 ist mit einem Riegel 43 gekoppelt, beispielsweise durch ein Zugelement. In der Zeichnung ist beispielhaft ein Bowdenzug 44 als ein Zugelement eingezeichnet, das mit dem Hebel 42 verbunden ist. Wenn der Hebel 42 betätigt wird, zieht er den Riegel 43 aus seiner in Figur 2a gezeichneten Verriegelungsstellung, in der der Riegel 43 in eine Verriegelungsaufnahme 46 eines Lagerbolzenkörpers 47 eingreift.

Der Lagerbolzenkörper 47 definiert die Schwenkachse 30 des Halters 25a. Der Lagerbolzenkörper 47 ist an einem Lagerbock 48 vorgesehen, steht beispielsweise von diesem winkelig ab, der seinerseits wiederum an einem der jeweiligen Längsträger 13 oben angeordnet ist. Der Lagerbolzenkörper 47 und der Lagerbock 48 bilden die Lagerbasis 31 des Halters 25a. Die Lagerbolzenkörper 47 (in Figuren 2a, 2b ist nur einer sichtbar) greifen in einen Lagerrohrkörper 49 ein, dessen Innenkontur mit der Außenkontur des jeweiligen Lagerbolzenkörpers 47 korrespondiert, beispielsweise kreisrund ist. Somit schwenkt also der Lagerrohrkörper 49 um den Lagerbolzenkörper 47. Die die Formschlusskonturen 27 aufweisenden Formschlussvorsprünge 28 stehen nach radial außen vor den jeweiligen Lagerbolzenkörper 47 vor.

Ebenso bildet der jeweilige Lagerrohrkörper 49 eine Basis für den Träger 40a. Der Träger 40a ist als ein Rohrkörper ausgestaltet, in dessen Innenraum der Riegel 43 längsverstellbar gelagert ist, und zwar zwischen einer in Figur 2a dargestellten Verriegelungsstellung und einer in Figur 2b dargestellten Entriegelungsstellung.

Der Riegel 43 ist in seine Verriegelungsstellung (Figur 2a) federbelastet, nämlich durch eine Federanordnung 50. Die Federanordnung 50 weist beispielsweise eine Schraubenfeder auf, die sich an einem Bund 51 des Riegels 43 abstützt und die von dem Bowdenzug 44 oder einem Zugseil durchdrungen ist. An einer vom Riegel 43 entgegengesetzten Seite stützt sich die Federanordnung 50 weiterhin am Träger 40a ab, was man in der Zeichnung aber nicht sieht.

Mit Vorteil ist also die Anordnung des Halters 25a so getroffen, dass bei diesem in Gestalt des Lagerrohrkörpers 49 ein erstes Rohr und in Gestalt des Trägers 40a ein zweites Rohr zueinander winkelig sind und miteinander verbunden sind. Der Formschlussvorsprung 28 sowie der Träger 40a stehen etwa in einem Winkel von 90° radial vom Lagerrohrkörper 49 ab. Wenn also der Formschlussvorsprung 28 in die Formschlussaufnahme 67 an der Transporteinrichtung 60 eingreift, steht der Träger 40a zweckmäßigerweise im Wesentlichen senkrecht.

Diese Anordnung ist vorteilhaft auch im Hinblick auf die Entriegelung beziehungsweise im Hinblick auf das Lösen der Befestigungseinrichtung 20a: Der Träger 40a kann nämlich als ein Betätigungshebel dienen, mit dem die Transporteinrichtung 60 aus der Aufnahme 36 ausschwenkbar beziehungsweise aushebelbar ist. Dabei schwenkt die Transporteinrichtung 60 zum einen um die Schwenkachse 34 der Gegenhalter 26a, was letztlich einem Gleiten entspricht, und zum andern zumindest in einem ersten Abschnitt der Lösebewegung von der Haltestellung H in die Freigabestellung F an den Formschlusskonturen 27 der Halter 25a um die Schwenkachse 33.

Entsprechend gegensinnig erfolgt das Befestigen der Transporteinrichtung 60 am Heckträger 10a, indem nämlich die Halter 25a sozusagen in den Formschluss mit den Formschlussaufnahmen 67 der Halterkonturen 65 einschwenken, so dass die Transporteinrichtung 60 sozusagen in den Formschluss der Aufnahme 36 hineingehebelt wird. Dadurch ist ein besonders fester Halt möglich.

Zur Verstärkung dieses Haltes ist es beispielsweise denkbar, dass die Formschlusskonturen 27 und/oder die Formschlussaufnahmen 67 eine gewisse Exzentrizität aufweisen, so dass die Transporteinrichtung 60 am Heckträger 10a im Klemmsitz gehalten wird.

Weiterhin kann eine Exzentrizität oder eine Ausgestaltung der Konturen 27, 65, 66 auch so getroffen sein, dass die Halter 25a-25c und/oder die Gegenhalter 26a-26c die Transporteinrichtung 60 in Richtung der Auflagefläche 15 kraftbeaufschlagen, mithin also deren Halt bezüglich der Tragstruktur 12 verbessern.

Die Schwenkachsen 30, 33 und 34 verlaufen bei Gebrauch des jeweiligen Heckträgers 10a-10c im Wesentlichen horizontal (abhängig von der Horizontallage des Kraftfahrzeuges 90). Mithin sind also die Schwenkachsen 30, 33 und 34 parallel zu einer Ebene, der Auflagefläche 15.

Die Halter 25b des Heckträgers 10b sind in Aufnahmen 52 der Längsträger 13 des Heckträgers 10b schwenkbar gelagert. Die Halter 25b schwenken um Lagerbolzen 53, die in den Aufnahmen 52 aufgenommen sind. Zur Entriegelung beziehungsweise Verriegelung der Halter 25b dient ein Hebel 54, der bügelartig nach oben vor die Längsträger 13 vorsteht und an diesen beispielsweise schwenkbar und/oder verschieblich gelagert ist. Durch eine Betätigung des Hebels 54, der also ein Bedienorgan für die Befestigungseinrichtung 20b darstellt, können die beiden Halter 25b schwenken oder auch nicht.

Der Hebel 54 ist in der Art eines U-förmigen Bügels ausgestaltet. An den beiden Seitenschenkeln des Hebels 54 sind Lager 56 für Leuchten 55 angeordnet, so dass die Leuchten 55 zwischen einer in durchgezogenen Linien dargestellten operativen Position sowie einer in gestrichelten Linien dargestellten inoperativen Position schwenkbar gelagert sind. Weiterhin dient der Hebel 54 als Tragbasis für einen Kennzeichenträger 57 zur Befestigung eines Kennzeichens am Heckträger 10b. Der Kennzeichenträger 57 ist ebenfalls an den beiden Seitenschenkeln des Hebels 54 befestigt.

Eine bevorzugte Ausgestaltung des Heckträgers 10b beziehungsweise der Befestigungseinrichtung 20b sieht vor, dass der Hebel 54 und die Halter 25b schwenkfest beziehungsweise drehfest zueinander sind, so dass durch Umlegen beziehungsweise Betätigen des Hebels 54 die beiden Halter 25b schwenkbar sind. Somit dient also der Hebel 54 gleichzeitig als eine Schwenk-Betätigungshandhabe oder als ein Betätigungshebel zum Betätigen der Halter 25b.

Der Heckträger 10c ist für eine Fußbetätigung vorgesehen. Die Formschlussvorsprünge 28 der Halter 25c sind an Haltekörpern 70 vorgesehen, die insgesamt eine L-förmige Gestalt haben. An einem freien Ende eines Schenkels 71 eines Haltekörpers 70 befindet sich also die Formschlusskontur 27. Der andere Schenkel 72 ist im Bereich seines freien Längsendes von einem Schwenkbolzen 73 durchdrungen, so dass insgesamt das Schwenklager 29 gebildet ist. Der Haltekörper 70 schwenkt um den Schwenkbolzen 73 oder, wenn der Schwenkbolzen 73 bezüglich des Haltekörpers 70 drehfest ist, schwenkt der Schwenkbolzen 73 am Längsträger 13. An der freien Oberseite des Schenkels 71 ist eine Betätigungsfläche 74 vorgesehen. Durch Druck auf die Betätigungsfläche 74, beispielsweise mit dem Fuß eines Bedieners, schwenkt der Halter 25c in Richtung des Pfeils 38 entgegen der Kraft einer Feder 75. Die Feder 75, beispielsweise eine Schraubenfeder, belastet den Halter 25c in seine Haltestellung H. Beispielsweise wirkt die Feder 75 auf das freie Ende des Schenkels 72 des Haltekörpers 70.

## Patentansprüche

1. Heckträger, der an einem Heck (91) eines Kraftfahrzeugs (90) angeordnet oder anordenbar ist und eine Tragstruktur (12) zum Tragen einer Transporteinrichtung (60) aufweist, wobei eine Befestigungseinrichtung (20-20c) zum Befestigen der Transporteinrichtung (60) an der Tragstruktur (12) vorgesehen ist, wobei die Befestigungseinrichtung (20-20c) einen Bestandteil des Heckträgers (10a-10b) bildet und mindestens einen Halter (25a-25c) und mindestens einen dem mindestens einen gegenüberliegenden Gegenhalter (26a-26c) aufweist, die Formschlusskonturen (27) zum formschlüssigem Eingriff in einer Haltestellung (H) der Befestigungseinrichtung (20-20c) in eine zu dem mindestens einen Halter (25a-25c) passende Halterkontur (65) und eine zu dem mindestens einen Gegenhalter (26a-26c) passende Gegenhalterkontur (66) aufweisen, die an einander entgegengesetzten Seiten der Transporteinrichtung (60) vorgesehen sind, und wobei der mindestens eine Halter (25a-25c) und/oder der mindestens eine Gegenhalter (26a-26c) mindestens ein Schwenklager (29, 32) zum Verstellen der Befestigungseinrichtung (20-20c) von der Haltestellung (H) in eine zum Freigeben der Transporteinrichtung (60) vorgesehene Freigabestellung (F) und/oder zum Schwenken der Transporteinrichtung (60) für ein Entfernen von der Tragstruktur (12) umfassen oder bilden, **dadurch gekennzeichnet, dass** der mindestens eine Halter (25a-25c) an oder in einem Träger (40a, 40b) angeordnet ist, der als Betätigungshebel zum Verstellen des Halters (25a-25c) ausgestaltet ist.

2. Heckträger nach Anspruch 1, **dadurch gekennzeichnet, dass** die Tragstruktur (12) mindestens eine Auflagefläche (15) zum Auflegen der Transporteinrichtung (60) aufweist, und der mindestens eine Halter (25a-25c) und der mindestens eine Gegenhalter (26a-26c) im Eingriff mit der Transporteinrichtung (60) sind, wenn die Transporteinrichtung (60) auf der mindestens einen Auflagefläche (15) zumindest abschnittsweise flächig aufliegt.

3. Heckträger nach Anspruch 1 oder 2, **dadurch gekennzeichnet, dass** eine Schwenkachse (30, 33, 34) des mindestens einen Schwenklagers (29, 32) in einer Auflageebene oder parallel oder spitzwinkelig zu der Auflageebene verläuft, in der die Transporteinrichtung (60) auf der Tragstruktur (12) aufliegt.

4. Heckträger nach einem der vorhergehenden Ansprüche, **dadurch gekennzeichnet, dass** die Formschlusskonturen (27) des mindestens einen Halters (25a-25c) und/oder des mindestens einen Gegenhalters (26a-26c) und/oder die Halterkontur (65) und/oder die Gegenhalterkontur (66) eine insbesondere im Wesentlichen kreisförmige oder bogenförmige Gleitkontur zum Gleiten an der jeweiligen Gegenkontur aufweist oder bildet.

5. Heckträger nach einem der vorhergehenden Ansprüche, **dadurch gekennzeichnet, dass** der mindestens eine Halter (25a-25c) und die Transporteinrichtung (60) beim Verstellen zwischen der Haltestellung (H) und der Freigabestellung (F) gegensinnig schwenken.

6. Heckträger nach einem der vorhergehenden Ansprüche, **dadurch gekennzeichnet, dass** der mindestens eine Halter (25a-25c) in der Art eines Hebels wirkt derart, dass der beim Verstellen in die Freigabestellung (F) die Transporteinrichtung (60) von der Tragstruktur (12) wegbewegt, insbesondere schwenkt.

7. Heckträger nach einem der vorhergehenden Ansprüche, **dadurch gekennzeichnet, dass** die Formschlusskonturen (27) des mindestens einen Halters (25a-25c) und/oder des mindestens einen Gegenhalters (26a-26c) und/oder die Halterkontur (65) und/oder die Gegenhalterkontur (66) einen Formschlussvorsprung (28) und/oder eine Formschlussaufnahme (67) aufweisen.

8. Heckträger nach einem der vorhergehenden Ansprüche, **dadurch gekennzeichnet, dass** die Transporteinrichtung (60) in der Haltestellung (H) zwischen den mindestens einen Halter (25a-25c) und den mindestens einen Gegenhalter (26a-26c) geklemmt ist.

9. Heckträger nach einem der vorhergehenden Ansprüche, **dadurch gekennzeichnet, dass** der mindestens eine Halter (25a-25c) an einem Lagerrohrkörper (49) angeordnet ist, der an einem Lagerbolzenkörper (47) schwenkbar gelagert ist.

10. Heckträger nach einem der vorhergehenden Ansprüche, **dadurch.gekennzeichnet, dass** die Befestigungseinrichtung (20-20c) einen Riegel (43) zum Verriegeln des mindestens einen Halters (25a-25c) in Haltestellung (H) aufweist.

11. Heckträger nach Anspruch 10, **dadurch gekennzeichnet, dass** der Riegel (43) durch eine Federanordnung (50) in seine den Halter (25a-25c) verriegelnde Verriegelungsstellung federbelastet ist.

12. Heckträger nach einem der vorhergehenden Ansprüche, **dadurch gekennzeichnet, dass** der Träger (40a, 40b) u-förmig und/oder bügelartig und/oder rohrartig ist.

13. Heckträger nach einem der vorhergehenden Ansprüche, **dadurch gekennzeichnet, dass** er als eine aus dem Heck (91) des Kraftfahrzeugs (90) ausziehbare Schublade ausgestaltet ist oder eine Halteeinrichtung zum lösbaren Befestigen an dem Kraftfahrzeug (90), insbesondere einen Kupplungshalter (11) zum lösbaren Befestigen an einer Anhängekupplung des Kraftfahrzeugs (90), aufweist.

14. Heckträger nach einem der vorhergehenden Ansprüche, **dadurch gekennzeichnet, dass** ein Riegel (43) zum Verriegeln des mindestens einen Halters (25a-25c) an dem Träger (40a, 40b) angeordnet ist und/oder der Träger (40a, 40b) zum Befestigen einer Last an dem Heckträger (10a-10c) vorgesehen ist.

## Claims

1. Rear member which is or may be fitted to a rear (91) of a motor vehicle (90) and has a support structure (12) for carrying a transport fixture (60), wherein a fastening device (20-20c) is provided for fastening the transport fixture (60) to the support structure (12), wherein the fastening device (20-20c) forms an integral part of the rear member (10a-10b) and has at least one holder (25a-25c) and at least one mating holder (26a-26c) opposite the holder or holders and having interlocking contours (27) for interlocking engagement in a holding position (H) of the fastening device (20-20c) in a holder contour (65) matching the holder or holders (25a-25c) and a mating holder contour (66) matching the mating holder or holders (26a-26c), and provided on opposite sides of the transport fixture (60), and wherein the holder or holders (25a-25c) and/or the mating holder or holders (26a-26c) include or form at least one swivel bearing (29, 32) for adjusting the fastening device (20-20c) from the holding position (H) into a released position (F) provided for release of the transport fixture (60) and/or for swivelling the transport fixture (60) for removal from the support structure (12), **characterised in that** the holder or holders (25a-25c) are fitted on or in a member (40a, 40b) which is designed as an actuating lever for adjusting the holder (25a-25c).

2. Rear member according to claim 1, **characterised in that** the support structure (12) has at least one seating surface (15) for placing of the transport fixture (60), and the holder or holders (25a-25c) and the mating holder or holders (26a-26c) are in engagement with the transport fixture (60) when the transport fixture (60) lies at least substantially flat on the seating surface or surfaces (15).

3. Rear member according to claim 1 or 2, **characterised in that** swivel axis (30, 33, 34) of the swivel bearing or bearings (29, 32) runs in a seating plane or parallel or at an acute angle to the seating plane in which the transport fixture (60) lies on the support structure (12).

4. Rear member according to any of the preceding claims, **characterised in that** the interlocking contours (27) of the holder or holders (25a-25c) and/or the mating holder or holders (26a-26c) have or form a slide contour, in particular substantially circular or curved, for sliding on the respective mating contour.

5. Rear member according to any of the preceding claims, **characterised in that** the holder or holders (25a-25c) and the transport fixture (60) swivel in opposite directions during adjustment between the holding position (H) and the released position (F).

6. Rear member according to any of the preceding claims, **characterised in that** the holder or holders (25a-25c) acts or act in the manner of a lever in such a way that, during adjustment into the released position (F), the transport fixture (60) moves away from the support structure (12), in particular by swivelling.

7. Rear member according to any of the preceding claims, **characterised in that** the interlocking contours (27) of the holder or holders (25a-25c) and/or the mating holder or holders (26a-26c) and/or the holder contour (65) and/or the mating holder contour (66) have an interlocking projection (28) and/or an interlocking location (67).

8. Rear member according to any of the preceding claims, **characterised in that** the transport fixture (60) in the holding position (H) is clamped between the holder or holders (25a-25c) and the mating holder or holders (26a-26c).

9. Rear member according to any of the preceding claims, **characterised in that** the holder or holders (25a-25c) is or are fitted to a bearing tube body (49) which is mounted pivotably on a bearing pin body (47).

10. Rear member according to any of the preceding claims, **characterised in that** the fastening device (20-20c) has a sliding bolt (43) for locking the holder or holders (25a-25c) in the holding position (H).

11. Rear member according to claim 10, **characterised in that** the sliding bolt (43) is spring-loaded by a spring assembly (50) in its locking position in which it locks the holder (25a-25c).

12. Rear member according to any of the preceding claims, **characterised in that** the member (40a, 40b) is U-shaped and/or bow-like and/or tubular.

13. Rear member according to any of the preceding claims, **characterised in that** it is in the form of a drawer which may be pulled out of the rear (91) of the motor vehicle (90) or has a holding fixture for releasable attachment to the motor vehicle (90), in particular a coupling holder (11) for releasable attachment to a trailer coupling of the motor vehicle (90).

14. Rear member according to any of the preceding claims, **characterised in that** a sliding bolt (43) for locking the holder or holders (25a-25c) is fitted to the member (40a, 40b) and/or the member (40a, 40b) is provided for the fastening of a load to the rear member (10a-10b).

## Revendications

1. Support arrière qui est ou peut être agencé sur une partie arrière (91) d'un véhicule automobile (90) et présente une structure porteuse (12) pour porter un dispositif de transport (60), un dispositif de fixation (20-20c) étant prévu pour la fixation du dispositif de transport (60) sur la structure porteuse (12), le dispositif de fixation (20-20c) formant un élément du support arrière (10a-10b) et présentant au moins un support (25a-25c) et au moins un contre-support (26a-26c) opposé à l'au moins un, qui présentent des contours à complémentarité de formes (27) pour l'engagement à complémentarité de formes dans une position de retenue (H) du dispositif de fixation (20-20c) dans un contour de support (65) adapté à l'au moins un support (25a-25c) et un contour de contre-support (66) adapté à l'au moins un contre-support (26a-26c) qui sont prévus sur des côtés opposés du dispositif de transport (60), et l'au moins un support (25a-25c) et/ou l'au moins un contre-support (26a-26c) comportant ou formant au moins un palier pivotant (29, 32) pour le déplacement du dispositif de fixation (20-20c) de la position de retenue (H) à une position de libération (F) prévue pour la libération du dispositif de transport (60) et/ou pour le pivotement du dispositif de transport (60) pour un retrait de la structure porteuse (12), **caractérisé en ce que** l'au moins un support (25a-25c) est agencé sur ou dans un élément porteur (40a, 40b) qui est configuré comme levier d'actionnement pour le déplacement du support (25a-25c).

2. Support arrière selon la revendication 1, **caractérisé en ce que** la structure porteuse (12) présente au moins une surface d'installation (15) pour l'installation du dispositif de transport (60) et l'au moins un support (25a-25c) et l'au moins un contre-support (26a-26c) sont en engagement avec le dispositif de transport (60) lorsque le dispositif de transport (60) repose sur l'au moins une surface d'installation (15) au moins par sections sur la surface.

3. Support arrière selon la revendication 1 ou 2, **caractérisé en ce qu'**un axe de pivotement (30, 33, 34) de l'au moins un palier pivotant (29, 32) s'étend dans un plan d'installation ou parallèlement ou à angle aigu par rapport au plan d'installation, dans lequel le dispositif de transport (60) repose sur la structure porteuse (12).

4. Support arrière selon l'une quelconque des revendications précédentes, **caractérisé en ce que** les contours à complémentarité de formes (27) de l'au moins un support (25a-25c) et/ou de l'au moins un contre-support (26a-26c) et/ou le contour de support (65) et/ou le contour de contre-support (66) présente ou forme un contour glissant en particulier sensiblement circulaire ou arqué pour le glissement sur le contre-contour respectif.

5. Support arrière selon l'une quelconque des revendications précédentes, **caractérisé en ce que** l'au moins un support (25a-25c) et le dispositif de transport (60) pivotent en sens inverse lors du déplacement entre la position de retenue (H) et la position de libération (F).

6. Support arrière selon l'une quelconque des revendications précédentes, **caractérisé en ce que** l'au moins un support (25a-25c) agit comme un levier de telle manière que lors du déplacement dans la position de libération (F), le dispositif de transport (60) se déplace loin de la structure porteuse (12), en particulier pivote.

7. Support arrière selon l'une quelconque des revendications précédentes, **caractérisé en ce que** les contours à complémentarité de formes (27) de l'au moins un support (25a-25c) et/ou de l'au moins un contre-support (26a-26c) et/ou le contour de support (65) et/ou le contour de contre-support (66) présentent une saillie à complémentarité de formes (28) et/ou un logement à complémentarité de formes (67).

8. Support arrière selon l'une quelconque des revendications précédentes, **caractérisé en ce que** le dispositif de transport (60) est serré dans la position de retenue (H) entre l'au moins un support (25a-25c) et l'au moins un contre-support (26a-26c).

9. Support arrière selon l'une quelconque des revendications précédentes, **caractérisé en ce que** l'au moins un support (25a-25c) est agencé sur un corps de tube de palier (49) qui est logé de manière pivotante sur un corps de boulon de palier (47).

10. Support arrière selon l'une quelconque des revendications précédentes, **caractérisé en ce que** le dispositif de fixation (20-20c) présente un verrou (43) pour le verrouillage de l'au moins un support (25a-25c) dans la position de retenue (H).

11. Support arrière selon la revendication 10, **caractérisé en ce que** le verrou (43) est sollicité par ressort par un agencement de ressort (50) dans sa position de verrouillage verrouillant le support (25a-25c).

12. Support arrière selon l'une quelconque des revendications précédentes, **caractérisé en ce que** l'élément porteur (40a, 40b) est en forme de U et/ou d'étrier et/ou de tube.

13. Support arrière selon l'une quelconque des revendications précédentes, **caractérisé en ce qu'**il est configuré comme un tiroir rétractable de la partie arrière (91) du véhicule automobile (90) ou présente un dispositif de retenue pour la fixation détachable sur le véhicule automobile (90), en particulier un support d'attelage (11) pour la fixation détachable sur un attelage du véhicule automobile (90).

14. Support arrière selon l'une quelconque des revendications précédentes, **caractérisé en ce qu'**un verrou (43) est agencé pour le verrouillage de l'au moins un support (25a-25c) sur l'élément porteur (40a, 40b) et/ou l'élément porteur (40a, 40b) est prévu pour la fixation d'une charge sur le support arrière (10a-10c).
